(19) Europäisches Patentamt
European Patent Office
Office européen des brevets

(11) EP 4 745 173 A1

(12) **EUROPEAN PATENT APPLICATION**
published in accordance with Art. 153(4) EPC

(43) Date of publication:
**20.05.2026 Bulletin 2026/21**

(21) Application number: **24839771.3**

(22) Date of filing: **09.07.2024**

(51) International Patent Classification (IPC):
***C08G 18/38*** *(2006.01)* ***C08G 18/08*** *(2006.01)*
***C08G 75/06*** *(2006.01)* ***G02B 1/04*** *(2006.01)*
***G02C 7/00*** *(2006.01)*

(52) Cooperative Patent Classification (CPC):
**C08G 18/08; C08G 18/38; C08G 75/06; G02B 1/04; G02C 7/00**

(86) International application number:
**PCT/JP2024/024854**

(87) International publication number:
**WO 2025/013881 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113708**

(71) Applicant: **Mitsui Chemicals, Inc.**
**Tokyo 104-0028 (JP)**

(72) Inventors:
- **NAKAI, Shinnosuke**
  **Omuta-shi, Fukuoka 836-8610 (JP)**
- **NAKANO, Shotaro**
  **Omuta-shi, Fukuoka 836-8610 (JP)**

(74) Representative: **Mewburn Ellis LLP**
**Aurora Building**
**Counterslip**
**Bristol BS1 6BX (GB)**

(54) **POLYMERIZABLE COMPOSITION, CURED PRODUCT, OPTICAL MATERIAL, SPECTACLE LENS, COMPOUND, METHOD FOR PRODUCING POLYMERIZABLE COMPOSITION, AND RESIN**

(57) The polymerizable composition includes: at least one selected from a polyiso(thio)cyanate compound or a polyepisulfide compound; a polythiol compound; and a compound represented by the following general formula (1) or a reaction product of the compound represented by the following general formula (1) with a polyiso(thio)cyanate compound or a polyepisulfide compound. In the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X is OH, SH or $NHR^2$; and $R^2$ represents a hydrogen atom or a hydrocarbon group.

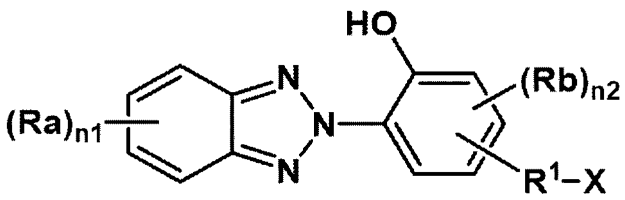

(1)

EP 4 745 173 A1

## Description

[Technical Field]

The present invention relates to a polymerizable composition, a cured product, an optical material, a spectacle lens, a compound, a method for producing polymerizable composition, and a resin.

[Background Art]

High-refractive-index plastic materials are increasingly being used as optical materials, such as spectacle lenses, for the reasons that they are lighter and less prone to breakage than inorganic materials such as glass, and that they are dyeable. Examples of plastic materials for optical applications include acrylic resins, polycarbonate, thiourethane resins, and episulfide resins. Among these, thiourethane resins and episulfide resins are known as plastic materials capable of achieving a high degree of refractive index (see, for example, Japanese Patent Application Laid-Open No. 2019-15922).

[Summary of the Invention]

[Problem to be Solved by the Invention]

Optical materials including a resin generally include an ultraviolet absorber (UVA) in order to prevent degradation caused by ultraviolet radiation. Since ultraviolet absorbers may leach out of resins depending on the conditions of use, and many compounds commonly used as ultraviolet absorbers are poorly biodegradable and raise concerns regarding, for example, accumulation in living organisms, they have recently become subject to environmental regulations. Accordingly, approaches for suppressing the release of ultraviolet absorbers from resins are being investigated.

In view of the foregoing, an embodiment of the present disclosure aims to provide a polymerizable composition that yields a resin with suppressed release of ultraviolet absorbers, and a production method thereof; and a cured product, an optical material and a spectacle lens that are obtained from the polymerizable composition.

A further embodiment of the present disclosure aims to provide a compound that yields a resin with suppressed release of ultraviolet absorbers, and a resin with suppressed release of ultraviolet absorbers.

[Means for Solving the Problem]

The means for solving the foregoing problem includes the following embodiments.

<1> A polymerizable composition, comprising:

at least one selected from a polyiso(thio)cyanate compound or a polyepisulfide compound;
a polythiol compound; and
a compound represented by the following general formula (1) or a reaction product of the compound represented by the following general formula (1) with a polyiso(thio)cyanate compound or a polyepisulfide compound:

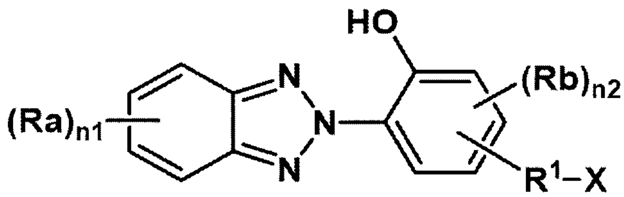

(1)

wherein, in the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X is OH, SH or $NHR^2$; and $R^2$ represents a hydrogen atom or a hydrocarbon group.

<2> The polymerizable composition according to <1>, wherein the polyiso(thio)cyanate compound includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

<3> The polymerizable composition according to <1> or <2>, wherein the polythiol compound includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

<4> A cured product of the polymerizable composition according to any one of <1> to <3>.

<5> An optical material, comprising the cured product according to <4>.

<6> A spectacle lens, comprising the optical material according to <5>.

<7> A compound represented by the following general formula (1):

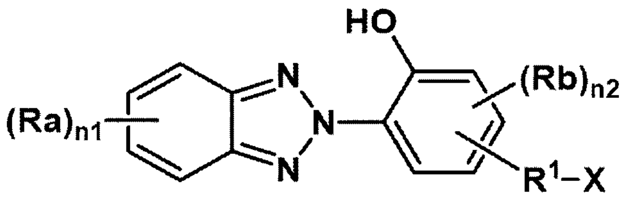

(1)

wherein, in the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X is OH, SH or $NHR^2$; and $R^2$ represents a hydrogen atom or a hydrocarbon group.

<8> A compound, comprising a reaction product of the compound according to <7> with a polyiso(thio)cyanate compound or a polyepisulfide compound.

<9> A compound having a structure represented by the following general formula (2) and an iso(thio)cyanate group:

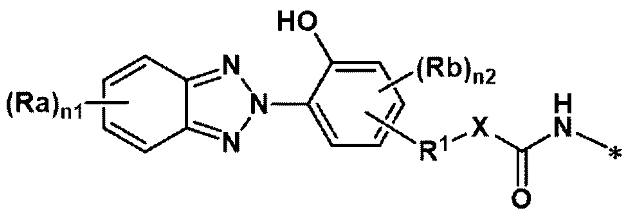

(2)

wherein, in the general formula (2), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X represents O, S or $NR^2$; $R^2$ represents a hydrogen atom or a hydrocarbon group; and * represents a bonding position.

<10> A compound having a structure represented by the following general formula (3) and an episulfide group:

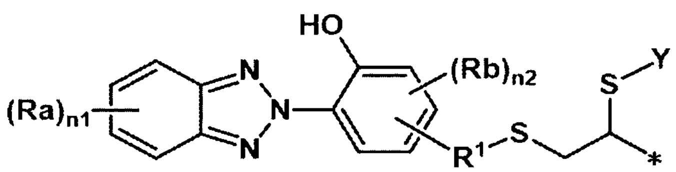

(3)

wherein, in the general formula (3), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; $R^2$ represents a hydrogen atom or a hydrocarbon group; * represents a bonding position; and Y represents a hydrogen atom or a bonding position.

<11> A method for producing a polymerizable composition, the method comprising mixing the compound according to any one of <7> to <10>, at least one selected from a polyiso(thio)cyanate compound or a polyepisulfide compound, and a polythiol compound.

<12> A resin having a structure represented by the following general formula (2) or the following general formula (3):

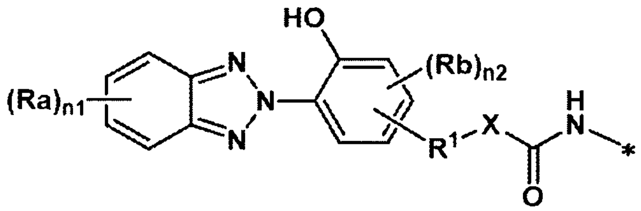

(2)

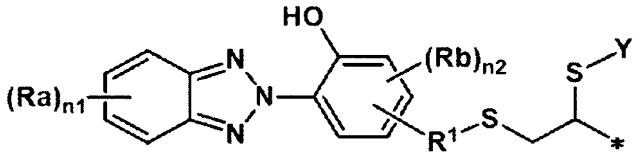

(3)

wherein, in the general formula (2) and the general formula (3), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X represents O, S or $NR^2$; $R^2$ represents a hydrogen atom or a hydrocarbon group; * represents a bonding position; and Y represents a hydrogen atom or a bonding position.

[Effect of the Invention]

According to the present disclosure, a polymerizable composition that yields a resin with suppressed release of ultraviolet absorbers, and a production method thereof; and a cured product, an optical material and a spectacle lens that are obtained from the polymerizable composition, are provided. According to the present disclosure, a compound that yields a resin with suppressed release of ultraviolet absorbers, and a resin with suppressed release of ultraviolet absorbers, are provided.

[Embodiments for Implementing the Invention]

In the present disclosure, a numerical range expressed using "to" means a range that includes both the lower limit value and the upper limit value described before and after "to".

In the present disclosure, when multiple substances corresponding to a component are present in a composition, the amount of the component in the composition refers to the total amount of all substances corresponding to the component that are present in the composition, unless otherwise specified.

In the stepwise numerical ranges described in the present disclosure, an upper limit value or a lower limit value described for one numerical range may be replaced with the upper limit value or lower limit value of another stepwise numerical range. Further, in the numerical ranges described in the present disclosure, the upper limit value or the lower limit value of the numerical range may be replaced with a value shown in the examples.

[Polymerizable Composition]

An embodiment of the present disclosure is a composition that includes:

at least one selected from a polyiso(thio)cyanate compound or a polyepisulfide compound;
a polythiol compound; and
a compound represented by the following general formula (1) or a reaction product of the compound represented by the following general formula (1) with a polyiso(thio)cyanate compound or a polyepisulfide compound:

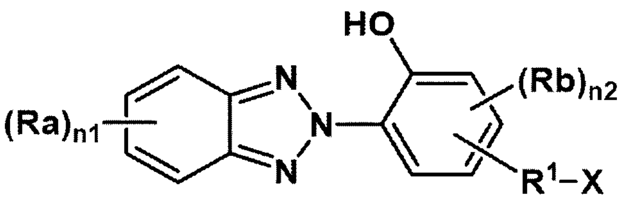

(1)

In the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$

represents a divalent hydrocarbon group; X is OH, SH or $NHR^2$; and $R^2$ represents a hydrogen atom or a hydrocarbon group.

The polymerizable composition of the present disclosure includes, as polymerizable components, at least one selected from a polyiso(thio)cyanate compound or a polyepisulfide compound (hereinafter also referred to as the "first component") and a polythiol compound (hereinafter also referred to as the "second component").

A resin containing a thiourethane structure can be obtained by reacting an iso(thio)cyanate group, which is a polymerizable functional group of the polyiso(thio)cyanate compound, with a thiol group, which is a polymerizable functional group of the polythiol compound.

A resin containing a sulfide structure can be obtained by reacting an episulfide group, which is a polymerizable functional group of the polyepisulfide compound, with a thiol group, which is a polymerizable functional group of the polythiol compound.

The resin obtained by the polymerization reaction between the first component and the second component (thiourethane resin or episulfide resin) has a high degree of refractive index, and is therefore suitably used for applications in which a high degree of refractive index is required, such as optical materials.

(Reactive UVA)

The polymerizable composition of the present disclosure includes, in addition to the first component and the second component, a compound represented by the general formula (1) or a reaction product of the compound represented by the general formula (1) with a polyiso(thio)cyanate compound or a polyepisulfide compound (hereinafter also referred to as "reactive UVA").

That is, the reactive UVAs can be classified into three types: (1) a compound represented by the general formula (1); (2) a reaction product of a compound represented by the general formula (1) with a polyiso(thio)cyanate compound; and (3) a reaction product of a compound represented by the general formula (1) with a polyepisulfide compound.

(1) The compound represented by the general formula (1) includes OH, SH or $NH_2$ represented by X (i.e., a functional group capable of reacting with the polymerizable functional group of the first component).

(2) The reaction product of the compound represented by the general formula (1) with a polyiso(thio)cyanate compound has, among the plural iso(thio)cyanate groups contained in the polyiso(thio)cyanate compound, an iso(thio)cyanate group that has not reacted with the functional group represented by X in the general formula (1).

(3) The reaction product of the compound represented by the general formula (1) with a polyepisulfide compound has, among the plural episulfide groups contained in the polyepisulfide compound, an episulfide group that has not reacted with the functional group represented by X in the general formula (1).

That is, each of the foregoing three types of reactive UVAs has the property of reacting with either the first component or the second component included in the polymerizable composition.

Accordingly, in the resin obtained from the polymerizable composition containing the reactive UVA, the molecule functioning as the UVA is bonded to the polymer structure formed by the polymerization reaction of the polymerizable components. As a result, the release of the molecule functioning as the UVA from the resin is suppressed.

The specific molecular structure of the compound represented by the general formula (1) is not particularly limited, as long as it exhibits properties as UVAs.

In the general formula (1), Ra is a monovalent hydrocarbon group or a halogen atom. Examples of the monovalent hydrocarbon group represented by Ra include alkyl groups having 1 to 3 carbon atoms. Examples of the halogen atom represented by Ra include fluorine, chlorine, bromine, and iodine atoms. From the viewpoint of ultraviolet absorption performance, Ra is preferably a halogen atom, and more preferably a chlorine atom or a bromine atom.

n1 represents the number of Ra, and is a number from 0 to 4. n1 is preferably from 0 to 2, and more preferably 0 or 1.

When the number of Ra is 2 or more, the two or more of Ra may be the same or different from each other.

In the general formula (1), Rb is a monovalent group that does not contain OH, SH or $NHR^2$.

Examples of the monovalent groups represented by Rb that do not contain OH, SH or $NHR^2$ include monovalent hydrocarbon groups, alkoxy groups, and monovalent groups containing an ester bond.

Examples of the monovalent hydrocarbon group represented by Rb include alkyl groups having 1 to 10 carbon atoms. The alkyl group may be linear or branched, and may have a substituent. Examples of the substituent include a phenyl group.

Examples of the alkoxy group represented by Rb include alkoxy groups composed of an alkyl group having 1 to 10 carbon atoms and an oxygen atom. The alkyl group may be linear or branched, and may have a substituent. Examples of the substituent include a phenyl group.

Examples of the monovalent group containing an ester bond represented by Rb include monovalent groups

represented by -Rc-C(=O)ORd or -Rc-OC(=O)-Rd (preferably -Rc-C(=O)ORd). In these formulas, Rc is an alkylene group having 1 to 10 carbon atoms, and Rd is an alkyl group having 1 to 10 carbon atoms. The alkylene group or the alkyl group may be linear or branched, and may have a substituent. Examples of the substituent include a phenyl group.

From the viewpoint of solubility in the polymerizable composition, Rb is preferably a monovalent hydrocarbon group, and more preferably an Sp3 hydrocarbon group (for example, a tert-butyl group).

From the viewpoint of ultraviolet absorption performance, Rb is preferably an alkoxy group having three or more carbon atoms.

n2 represents the number of Rb, and is a number from 0 to 3. n2 is preferably 0 to 2, and more preferably 0 or 1.

When the number of Rb is two or more, the two or more of Rb may be the same or different from each other.

In the general formula (1), $R^1$ is a divalent hydrocarbon group. Examples of the divalent hydrocarbon group represented by $R^1$ include alkylene groups or arylalkylene groups having 1 to 10 carbon atoms. The alkylene group may be linear or branched, and may include a cyclic structure. The position of $R^1$ on the aromatic ring may be any of para, meta, or ortho position relative to the OH group.

In the general formula (1), X is OH, SH or $NHR^2$, and $R^2$ is a hydrogen atom or a hydrocarbon group.

When the functional group of the first component that reacts with X is an iso(thio)cyanate group, X is preferably OH, SH or $NHR^2$.

When the functional group of the first component that reacts with X is an episulfide group, X is preferably SH.

The types of the polyiso(thio)cyanate compound or the polyepisulfide compound to be reacted with the compound represented by the general formula (1) are not particularly limited. For example, they may be selected from the polyiso(thio)cyanate compounds or polyepisulfide compounds described later.

As the reaction product of the compound represented by the general formula (1) and the polyiso(thio)cyanate compound, a compound having a structure represented by the following general formula (2) and an iso(thio)cyanate group can be mentioned.

As the reaction product of the compound represented by the general formula (1) and the polyepisulfide compound, a compound having a structure represented by the following general formula (3) and an episulfide group can be mentioned.

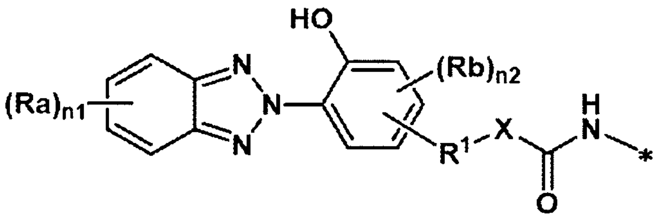

(2)

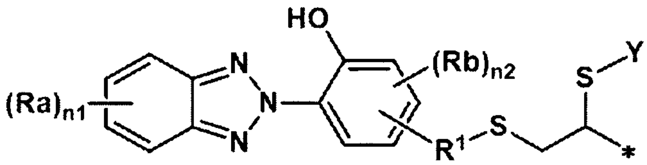

(3)

In the general formula (2) and the general formula (3), the definitions of Ra, n1, Rb, n2 and $R^1$ are the same as those of Ra, n1, Rb, n2 and $R^1$ in the general formula (1).

X represents O, S or $NR^2$, $R^2$ represents a hydrogen atom or a hydrocarbon group, * indicates a bonding position, and Y represents a hydrogen atom or a bonding position.

The reactive UVA included in the polymerizable composition may be a single species or two or more species.

That is, the polyiso(thio)cyanate compound or the polyepisulfide compound to be reacted with the compound represented by the general formula (1) may be a single species or two or more species, and the compound represented by the general formula (1) to be reacted with the polyiso(thio)cyanate compound or the polyepisulfide compound may be a single species or two or more species.

The polyiso(thio)cyanate compound or the polyepisulfide compound to be reacted with the compound represented by the general formula (1) may be the same as, or different from, the polyiso(thio)cyanate compound or the polyepisulfide compound that is included as the polymerizable component in the polymerizable composition.

The polymerizable composition may include, as the reactive UVA, only one of the compound represented by the general formula (1) or the reaction product of the compound represented by the general formula (1) with the first component, or may include both of them.

The amount of the compound represented by the general formula (1) included in the polymerizable composition

is not particularly limited, and may be selected depending on the intended use of the polymerizable composition.

From the viewpoint of obtaining sufficient ultraviolet absorption performance, the amount of the compound represented by the general formula (1) is preferably 0.1 parts by mass or more, more preferably 0.2 parts by mass or more, still more preferably 0.5 parts by mass or more, and particularly preferably 1.0 part by mass or more, with respect to 100 parts by mass of the total polymerizable components.

From the viewpoint of the color tone of the resin, the amount of the compound represented by the general formula (1) is preferably 5.0 parts by mass or less, more preferably 3.0 parts by mass or less, and still more preferably 2.0 parts by mass or less, with respect to 100 parts by mass of the total polymerizable components.

The "amount of the compound represented by the general formula (1)" described above does not include the amount of the polyiso(thio)cyanate compound or the polyepisulfide compound that has reacted with the compound represented by the general formula (1).

(Polyiso(thio)cyanate Compound)

In the present disclosure, the term "polyiso(thio)cyanate compound" refers to a compound having two or more isocyanate groups or isothiocyanate groups in one molecule.

The polyiso(thio)cyanate compound included in the polymerizable composition may be a single kind or two or more kinds.

The polyiso(thio)cyanate compound may include a dimer, a trimer, or a prepolymer. Examples of such polyiso(thio)cyanate compounds include those disclosed in International Publication WO 2011/055540.

Examples of the polyiso(thio)cyanate compound include aliphatic polyiso(thio)cyanate compounds, alicyclic polyiso(thio)cyanate compounds, aromatic polyiso(thio)cyanate compounds, and heterocyclic polyiso(thio)cyanate compounds.

The polyiso(thio)cyanate compound included in the composition may be a single compound or a combination of two or more compounds.

The alicyclic polyiso(thio)cyanate compound refers to a polyiso(thio)cyanate compound that includes an alicyclic structure and may further include a heterocyclic structure. The aromatic polyiso(thio)cyanate compound refers to a polyiso(thio)cyanate compound that includes an aromatic structure and may further include an alicyclic structure and a heterocyclic structure. The heterocyclic polyiso(thio)cyanate compound refers to a polyiso(thio)cyanate compound that includes a heterocyclic structure and does not include an alicyclic structure or an aromatic structure.

It is preferable that the polyiso(thio)cyanate compound include at least one selected from the group consisting of aliphatic polyiso(thio)cyanate compounds, alicyclic polyiso(thio)cyanate compounds, aromatic polyiso(thio)cyanate compounds, and heterocyclic polyiso(thio)cyanate compounds.

The polyiso(thio)cyanate compound preferably includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo[2.2.1]heptane, 2,6-bis(isocyanatomethyl)bicyclo[2.2.1]heptane, tolylene diisocyanate, 4,4'-diphenylmethane diisocyanate, and phenylene diisocyanate;

more preferably at least one selected from the group consisting of 2,5-bis(isocyanatomethyl)bicyclo[2.2.1]heptane, 2,6-bis(isocyanatomethyl)bicyclo[2.2.1]heptane, xylylene diisocyanate, and 1,3-bis(isocyanatomethyl)cyclohexane; and
further preferably at least one selected from the group consisting of 2,5-bis(isocyanatomethyl)bicyclo[2.2.1]heptane, 2,6-bis(isocyanatomethyl)bicyclo[2.2.1]heptane, and m-xylylene diisocyanate.

(Polyepisulfide Compound)

In the present disclosure, the term "polyepisulfide compound" refers to a compound having two or more episulfide groups in one molecule.

The polyepisulfide compound included in the polymerizable composition may be a single compound or two or more compounds.

Specific examples of the polyepisulfide compound include compounds represented by the following formula.

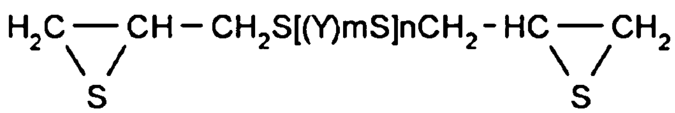

In the formula, Y represents a linear divalent hydrocarbon group having a carbon number of 1 to 4, a branched

divalent hydrocarbon group having a carbon number of 2 to 4, a cyclic divalent hydrocarbon group having a carbon number of 3 to 6, a 1,4-dithiane group, an arylene group, or an aralkylene group; m represents a number from 0 to 2; and n represents a number from 0 to 3.

Y may be substituted or unsubstituted.

Y is preferably a linear divalent hydrocarbon group having a carbon number of 1 to 4, a branched divalent hydrocarbon group having a carbon number of 2 to 4, or a cyclic divalent hydrocarbon group having a carbon number of 3 to 6, and more preferably a linear divalent hydrocarbon group having a carbon number of 1 to 4.

m is preferably 0 or 1, and more preferably 0.

n is preferably 0 or 1, and more preferably 1.

As the polyepisulfide compound, it is preferable to include at least one selected from the group consisting of bis(2,3-epithiopropyl) sulfide, bis(2,3-epithiopropyl) disulfide, and 2,5-bis(2,3-epithiopropylthiomethyl)-1,4-dithiane.

From the viewpoint of the refractive index of the resulting cured product, the polyepisulfide compound preferably has a refractive index at 20°C with respect to the sodium D-line (i.e., light having a wavelength of 589.3 nm) of 1.60 to 1.80.

(Polythiol Compound)

In the present disclosure, the term "polythiol compound" refers to a compound having two or more thiol groups in one molecule.

The polythiol compound contained in the composition may be a single compound or a combination of two or more compounds.

Specific examples of the polythiol compound include those described in International Publication No. WO 2016/125736.

The polythiol compound preferably includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl- 1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiopentane, and tris(mercaptomethylthio)methane;

more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate) and pentaerythritol tetrakis(2-mercaptoacetate); and

further preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate).

From the viewpoint of the refractive index of the resulting cured product, the polythiol compound preferably has a refractive index at 20°C with respect to the sodium D-line (i.e., light having a wavelength of 589.3 nm) of 1.60 to 1.80.

(Other Components)

The polymerizable composition may include, in addition to the polymerizable components and the reactive UVA, other components.

Examples of the other components include polymerization catalysts, internal release agents, resin modifiers, base generators, chain extenders, crosslinking agents, radical scavengers, light stabilizers, antioxidants, oil-soluble dyes, fillers, adhesion promoters, antibacterial agents, antistatic agents, dyes, fluorescent whitening agents, fluorescent pigments, and inorganic pigments.

Specific examples of the polymerization catalyst include tertiary amine compounds, inorganic acid salts or organic acid salts of tertiary amine compounds, metal compounds, quaternary ammonium salts, and organic sulfonic acids.

Specific examples of the internal release agent include acidic phosphate esters. Examples of the acidic phosphate ester include phosphate monoesters and phosphate diesters, which may be used individually or in combination of two or more.

Specific examples of the resin modifier include alcohol compounds, amine compounds, epoxy compounds, organic acids or acid anhydrides thereof, (meth)acrylate compounds, and olefin compounds.

When the polymerizable composition includes components other than the polymerizable components and the reactive UVA, the total content thereof may be, relative to the total mass of the polymerizable composition, from 0.1 ppm by mass to 70% by mass, from 1 ppm by mass to 30% by mass, from 10 ppm by mass to 10% by mass, or from 0.1% by mass to 5% by mass.

(Cured Product)

An embodiment of the present disclosure is a cured product of the above-described polymerizable composition.

In the cured product of the present disclosure, the molecule functioning as a UVA is in a state of being bound to the polymer structure formed by the polymerization reaction of the polymerizable components. Accordingly, the release of the component functioning as a UVA to the outside is suppressed. Furthermore, since the cured product of the present disclosure includes a polymer structure formed by the polymerization reaction between at least one selected from the polyiso(thio)cyanate compounds and polyepisulfide compounds, and the polythiol compound, as the polymerizable components, the cured product exhibits a high refractive index and excellent transparency.

The cured product of the present disclosure can be obtained, for example, by heating the polymerizable composition at a temperature at which the polymerization reaction of the polymerizable components occurs.

When the cured product of the present disclosure is photo-curable, the cured product can be obtained by applying the polymerizable composition with light having a wavelength at which the polymerization reaction of the polymerizable components occurs. It is possible to perform heating and light application in combination.

(Optical Material and Spectacle Lens)

An embodiment of the present disclosure is an optical material that includes the above-described cured product.

Examples of the optical material include optical adhesives, coatings, optical waveguides, films, lenses, antireflection films, microlenses, microlens arrays, wafer-level lenses, imaging lenses for cameras (such as in-vehicle cameras, digital cameras, PC cameras, mobile-phone cameras, and surveillance cameras), spectacle lenses, light-beam focusing lenses, light-diffusing lenses, and flash lenses for cameras.

An embodiment of the present disclosure is an spectacle lens that includes the above-described optical material.

(Compound)

An embodiment of the present disclosure is a compound represented by the following general formula (1), or a compound that is a reaction product of a compound represented by the following general formula (1) with a polyiso(thio)cyanate compound or a polyepisulfide compound.

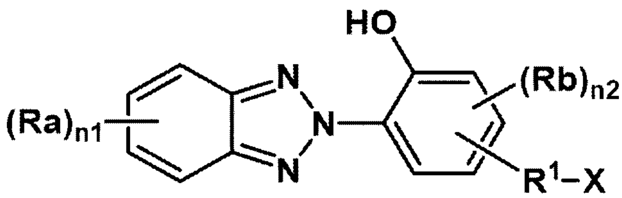

(1)

In the general formula (1), Ra represents a monovalent hydrocarbon group or a halogen atom; n1 represents a number from 0 to 4; Rb represents a monovalent group that does not contain OH, SH or $NHR^2$; n2 represents a number from 0 to 3; $R^1$ represents a divalent hydrocarbon group; X represents OH, SH or $NHR^2$; and $R^2$ represents a hydrogen atom or a hydrocarbon group.

An embodiment of the present disclosure is a compound having a structure represented by the following general formula (2) and an iso(thio)cyanate group.

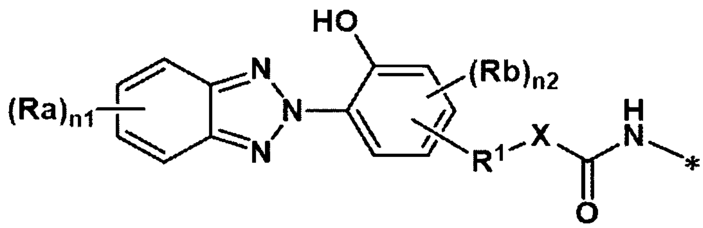

(2)

In the general formula (2), Ra represents a monovalent hydrocarbon group or a halogen atom; n1 represents a number from 0 to 4; Rb represents a monovalent group that does not contain OH, SH or $NHR^2$; n2 represents a number from 0 to 3; $R^1$ represents a divalent hydrocarbon group; X represents O, S or $NR^2$; $R^2$ represents a hydrogen atom or a hydrocarbon group; and * indicates a binding site.

An embodiment of the present disclosure is a compound having a structure represented by the general formula (3) and an episulfide group.

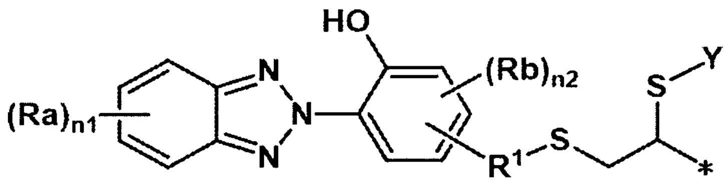

(3)

In the general formula (3), Ra represents a monovalent hydrocarbon group or a halogen atom; n1 represents a number from 0 to 4; Rb represents a monovalent group that does not contain OH, SH or $NHR^2$; n2 represents a number from 0 to 3; $R^1$ represents a divalent hydrocarbon group; $R^2$ represents a hydrogen atom or a hydrocarbon group; * indicates a bonding position; and Y represents a hydrogen atom or a bonding position.

The compound of the present disclosure is suitably used for the production of a resin obtained by curing a polymerizable component, or an article containing the resin. Details and preferred embodiments of the compound of the present disclosure may be referred to in the details and preferred embodiments of the reactive UVA contained in the above-described polymerizable composition.

(Method for Producing Polymerizable Composition)

An embodiment of the present disclosure is a method for producing a polymerizable composition, the method including a process of mixing the above-described compound of the present disclosure (reactive UVA), at least one compound selected from a polyiso(thio)cyanate compound or a polyepisulfide compound (first component), and a polythiol compound (second component).

According to the foregoing method, a cured product in which the release of the UVA is suppressed can be produced. Details and preferred embodiments of each compound used in the method of the present disclosure are the same as those described above for each compound.

In the foregoing method, the mixing of the reactive UVA, the first component, and the second component may be carried out in one stage or in two stages.

For example, it is possible to mix the reactive UVA with the first component, and then mix the same with the second component.

When a compound represented by the general formula (1) is used as the reactive UVA, all or a part of the compound represented by the general formula (1) may be in a state of a reaction product obtained by reacting with the first component, after mixing the compound represented by the general formula (1) with the first component.

(Resin)

An embodiment of the present disclosure is a resin having a structure represented by the following general formula (2) or the following general formula (3).

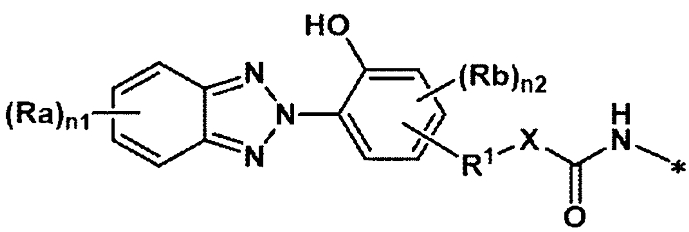

(2)

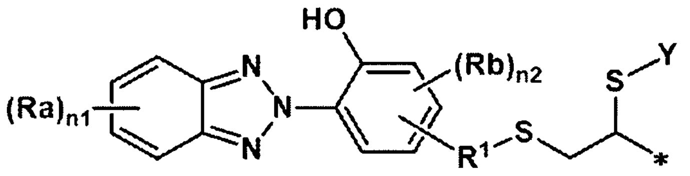

(3)

In the general formula (2) and the general formula (3), Ra represents a monovalent hydrocarbon group or a halogen atom; n1 represents a number from 0 to 4; Rb represents a monovalent group that does not contain OH, SH or $NHR^2$; n2 represents a number from 0 to 3; $R^1$ represents a divalent hydrocarbon group; X represents O, S, or $NR^2$; $R^2$ represents a hydrogen atom or a hydrocarbon group; * represents a bonding position; and Y represents a hydrogen atom or a bonding position.

The resin of the present disclosure is in a state in which a molecule functioning as a UVA is bound to a polymer structure. Accordingly, the release of the UVA is suppressed compared with a case in which the molecule functioning as a UVA is not bound to the polymer structure.

The type of the resin of the present disclosure is not particularly limited.

From the viewpoint of obtaining a high refractive index, it is preferable that the resin of the present disclosure includes at least one selected from a thiourethane structure and a sulfide structure.

[Examples]

Hereinafter, the present disclosure will be described in detail with reference to Examples. It should be noted that the present disclosure is not limited in any way by the descriptions of these Examples. Unless otherwise specified, the term "parts" refers to parts by mass. Unless otherwise specified, the "room temperature" refers to 25°C.

<Synthesis Example 1 of Reactive UVA>

Into a 100-mL eggplant flask, 1.2 g (0.031 mol) of lithium aluminum hydride (manufactured by FUJIFILM Wako Pure Chemical Corporation) and 30 mL of dehydrated tetrahydrofuran (manufactured by FUJIFILM Wako Pure Chemical Corporation) were added. Next, 5.0 g (0.013 mol) of the compound represented by the following structural formula (EVERSORB 88, manufactured by Everlight Chemical) was added, and the mixture was stirred at 0°C for 2 hours.

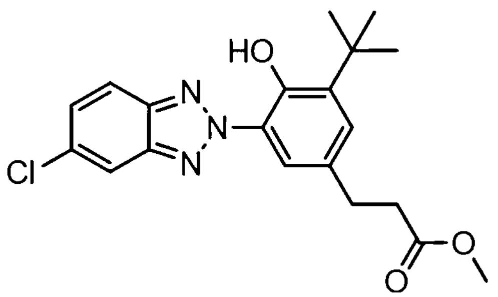

After completion of the reaction, 1.2 g of water, 1.2 g of a 15% by mass aqueous sodium hydroxide solution, and 3.6 g of water were successively added, and the reaction solution was subjected to reduced-pressure filtration. To the obtained solution, 100 mL of dichloromethane (manufactured by FUJIFILM Wako Pure Chemical Corporation) was added, and the solution was washed for 15 minutes with the addition of 20.0 g of a 35% by mass aqueous hydrochloric acid solution. Next, the solution was successively subjected to washing for 15 minutes with 10.0 g of water, 20.0 g of a saturated aqueous sodium carbonate solution, and 10.0 g of water. Thereafter, 10.0 g of anhydrous sodium sulfate was added to the obtained organic phase to effect dehydration, and the residue was removed by gravity filtration. The organic solvent was then distilled off under heated reduced pressure, followed by vacuum drying, thereby obtaining 3.5 g (yield: 75%) of an orange solid compound having a terminal hydroxy group (UVA-OH, structural formula shown below). It was confirmed by high-performance liquid chromatography that the peak at 24.5 minutes (starting material) disappeared and a new peak at 14.1 minutes (UVA-OH) appeared.

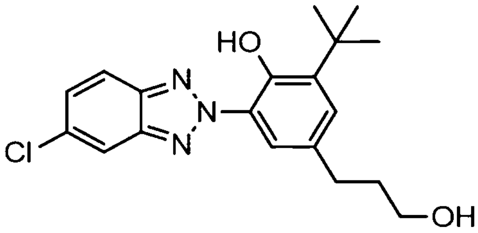

UVA-OH

<Synthesis Example 2 of Reactive UVA>

In a 100-mL eggplant flask, 2.5 g (0.029 mol) of 2-(2H-benzo[d][1,2,3]triazol-2-yl)-4-(2-hydroxyethyl)phenol (manufactured by BLD Pharmatech), 50 mL of dehydrated tetrahydrofuran, 3.0 g (0.029 mol) of triethylamine (manufactured by FUJIFILM Wako Pure Chemical Corporation), and 3.4 g (0.029 mol) of methanesulfonyl chloride (manufactured by FUJIFILM Wako Pure Chemical Corporation) were successively added, and the mixture was stirred at 0°C for 1 hour. After completion of the reaction, the reaction solution was washed for 15 minutes with the addition of 55.0 g of a 1% by mass aqueous hydrochloric acid solution. Subsequently, the reaction solution was successively subjected to washing for 15 minutes with 55.0 g of water, 55.0 g of a saturated aqueous sodium carbonate solution, and 110.0 g of water. The resulting organic phase was then dehydrated by adding 10.0 g of anhydrous sodium sulfate, and the residue was removed by gravity filtration. Thereafter, the organic solvent was removed under heated reduced pressure, and the product was dried under reduced pressure, thereby obtaining 9.8 g (yield: 99%) of a white solid compound having a terminal mesyl group (structure shown below). It was confirmed by high-performance liquid chromatography that the peak at 3.6 minutes (starting material) disappeared and a new peak at 4.4 minutes (mesylated product) appeared.

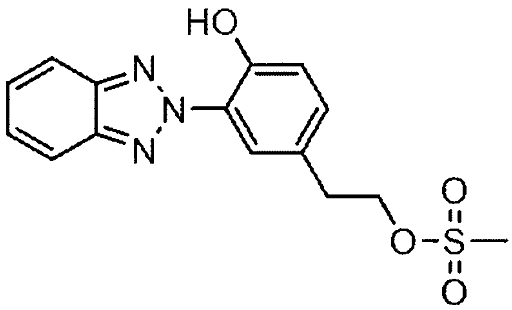

A 200-mL eggplant flask was charged with 5.0 g (0.015 mol) of the compound having a terminal mesyl group, 120 mL of dioxane (manufactured by FUJIFILM Wako Pure Chemical Corporation), and 1.7 g (0. 225 mol) of thiourea. The mixture was heated to 100°C and stirred for 3 hours. The temperature was then lowered to 60°C, and 2.3 g (0.034 mol) of a 25% by mass aqueous ammonia solution (manufactured by FUJIFILM Wako Pure Chemical Corporation) was added, followed by heating and stirring for 3 hours. The reaction mixture was then cooled to room temperature, after which the mixture was washed for 15 minutes with the addition of 100 mL of dichloromethane and 50.0 g of a 35% by mass aqueous hydrochloric acid solution. Subsequently, 100.0 g of water was added, and the washing procedure was performed three times for 15 minutes each. The resulting organic phase was dehydrated by adding 10.0 g of anhydrous sodium sulfate, and the residue was removed by gravity filtration. The solvent was then removed under heated reduced pressure, and the product was dried under reduced pressure, thereby obtaining 3.1 g (yield: 75%) of a white solid compound having a terminal mercapto group (UVA-SH, structure shown below). It was confirmed by high-performance liquid chromatography that the peak at 4.4 minutes disappeared and a new peak at 7.4 minutes (UVA-SH) appeared.

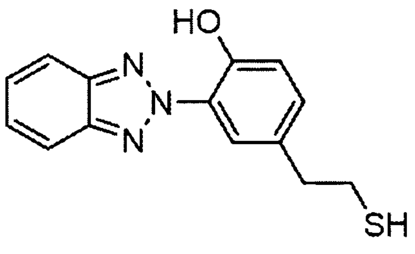

UVA–SH

<Comparative Example 1>

As the polyisocyanate compound, 7.8 parts by mass of m-xylylene diisocyanate (manufactured by Mitsui Chemicals, Inc.), 0.0023 parts by mass of dibutyltin dichloride as a curing catalyst, 0.015 parts by mass of an acidic phosphate ester (Zelec UN, manufactured by Stepan) as an internal mold release agent, and 0.23 parts by mass of the compound having the following structure as the ultraviolet absorber (Biosorb 583, manufactured by Kyodo Chemical Co, Ltd.) were mixed and dissolved at 20°C and stirred for 30 minutes. To this mixture, 7.2 parts by mass of 4-mercaptomethyl-1,8-dimercapto-3,6-dithiaoctane (manufactured by Mitsui Chemicals, Inc.) was added as the polythiol compound and mixed, thereby obtaining, as a homogeneous liquid, a polymerizable composition for producing a resin molded article.

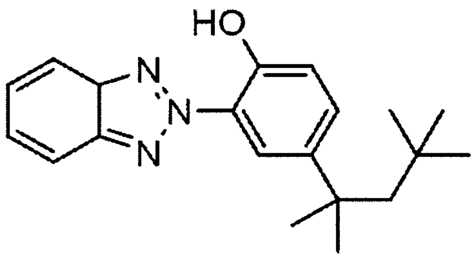

The obtained polymerizable composition was defoamed at 600 Pa for 1 hour, and then filtered through a 1 μm Teflon (registered trademark) filter. The filtered polymerizable composition was poured into a mold composed of a pair of glass plates fixed to each other with tape. This mold was placed in an oven, and the temperature inside the oven was raised from 10°C to 120°C over 38 hours to cure the polymerizable composition. The cured product was removed from the mold and annealed at 120°C for 2 hours, thereby obtaining a flat plate-shaped resin molded article having a thickness of 3.0 mm.

<Comparative Example 2>

A flat plate-shaped resin molded article having a thickness of 3.0 mm was obtained by performing the polymerization process in the same manner as in Comparative Example 1, except that: the polyisocyanate compound was changed to 7.6 parts by mass of a mixture of 2,5-bis(isocyanatomethyl)bicyclo[2.2.1]heptane and 2,6-bis(isocyanatomethyl)bicyclo[2.2.1]heptane (manufactured by Mitsui Chemicals, Inc.); the amount of dibutyltin dichloride was changed from 0.0023 parts by mass to 0.009 parts by mass; the amount of the internal release agent was changed from 0.015 parts by mass to 0.018 parts by mass; and the polythiol compound was changed to 3.8 parts by mass of 4-mercaptomethyl-1,8-dimercapto-3,6-dithiaoctane and 3.6 parts by mass of pentaerythritol tetrakis(3-mercaptopropionate) (manufactured by Mitsui Chemicals, Inc.).

<Comparative Example 3>

A flat plate-shaped resin molded article having a thickness of 3.0 mm was obtained by performing the polymerization process in the same manner as in Comparative Example 1, except that: the amount of m-xylylene diisocyanate was changed from 7.8 parts by mass to 7.6 parts by mass; and the polythiol compound was changed to 7.4 parts by mass of a mixture of 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane (manufactured by Mitsui Chemicals, Inc.).

<Comparative Example 4>

A polymerizable composition for producing a resin molded article was obtained, as a homogeneous liquid, by mixing 10.0 parts by mass of bis(2,3-epithiopropyl) disulfide (manufactured by Mitsui Chemicals, Inc.) as the polyepisulfide compound, 0.002 parts by mass of N,N-dimethylcyclohexylamine (manufactured by Tokyo Chemical Industry Co., Ltd.), 0.01 parts by mass of N,N-dicyclohexylmethylamine (manufactured by Tokyo Chemical Industry Co., Ltd.), 0.99 parts by mass of a mixture of 4,8-dimercaptomethyl-1,11-dimercapto-3,6,9-trithiaundecane, 4,7-dimercaptomethyl-1,11-dimercapto-3,6,9-trithiaundecane and 5,7-dimercaptomethyl-1,11-dimercapto-3,6,9-trithiaundecane (manufactured by Mitsui Chemicals, Inc.) as the polythiol compound, and 0.11 parts by mass of the compound having the following structure as the ultraviolet absorber (Tinuvin PS, manufactured by BASF Japan Ltd.).

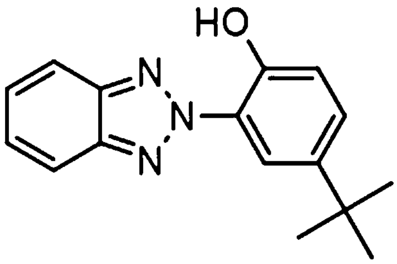

The obtained polymerizable composition was defoamed at 600 Pa for 1 hour, and then filtered through a 1 μm Teflon (registered trademark) filter. The filtered polymerizable composition was poured into a mold composed of a pair of glass plates fixed to each other with tape. This mold was placed in an oven, and the temperature inside the oven was raised from 10°C to 120°C over 20 hours to cure the polymerizable composition. The cured product was removed from the mold and annealed at 120°C for 2 hours, thereby obtaining a flat plate-shaped resin molded article having a thickness of 3.0 mm.

<Example 1>

A flat plate-shaped resin molded article having a thickness of 3.0 mm was obtained by performing the polymerization in the same manner as in Comparative Example 1, except that the ultraviolet absorber was changed to 0.075 parts by mass of UVA-OH.

Before injecting the polymerizable composition into the mold, formation of urethane bonds (appearance of a new peak at 1600-1750 $cm^{-1}$) was confirmed by performing FT-IR measurement (using IR Spirit, manufactured by Shimadzu Corporation; the same applies hereinafter). From this result, it was confirmed that a reaction product of UVA-OH and the polyisocyanate compound was formed in the polymerizable composition.

<Example 2>

A flat plate-shaped resin molded article having a thickness of 3.0 mm was obtained by performing the polymerization in the same manner as in Comparative Example 1, except that the ultraviolet absorber was changed to 0.15 parts by mass of UVA-OH.

Before injecting the polymerizable composition into the mold, formation of urethane bonds (appearance of a new peak at 1600-1750 $cm^{-1}$) was confirmed by performing FT-IR measurement. From this result, it was confirmed that a reaction product of UVA-OH and the polyisocyanate compound was formed in the polymerizable composition.

<Example 3>

A flat plate-shaped resin molded article having a thickness of 3.0 mm was obtained by performing the polymerization in the same manner as in Comparative Example 3, except that the ultraviolet absorber was changed to 0.075 parts by mass of UVA-OH.

Before injecting the polymerizable composition into the mold, formation of urethane bonds (appearance of a new peak at 1600-1750 $cm^{-1}$) was confirmed by performing FT-IR measurement.

<Example 4>

A flat plate-shaped resin molded article having a thickness of 3.0 mm was obtained by performing the polymerization in the same manner as in Comparative Example 1, except that the ultraviolet absorber was changed to 0.20 parts by mass of UVA-SH.

Before injecting the polymerizable composition into the mold, formation of thiourethane bonds (appearance of a new peak at 1600-1750 $cm^{-1}$) was confirmed by performing FT-IR measurement. From this result, it was confirmed that a reaction product of UVA-SH and the polyisocyanate compound was formed in the polymerizable composition.

<Example 5>

A flat plate-shaped resin molded article having a thickness of 3.0 mm was obtained by performing the polymerization in the same manner as in Comparative Example 2, except that the ultraviolet absorber was changed to 0.20 parts by mass of UVA-SH.

Before injecting the polymerizable composition into the mold, formation of thiourethane bonds (appearance of a new peak at 1600-1750 $cm^{-1}$) was confirmed by performing FT-IR measurement. From this result, it was confirmed that a

reaction product of UVA-SH and the polyisocyanate compound was formed in the polymerizable composition.

<Example 6>

A flat plate-shaped resin molded article having a thickness of 3.0 mm was obtained by performing the polymerization in the same manner as in Comparative Example 3, except that the ultraviolet absorber was changed to 0.20 parts by mass of UVA-SH.

Before injecting the polymerizable composition into the mold, formation of thiourethane bonds (appearance of a new peak at 1600-1750 $cm^{-1}$) was confirmed by performing FT-IR measurement. From this result, it was confirmed that a reaction product of UVA-SH and the polyisocyanate compound was formed in the polymerizable composition.

<Example 7>

A flat plate-shaped resin molded article having a thickness of 3.0 mm was obtained by performing the polymerization in the same manner as in Comparative Example 4, except that the ultraviolet absorber was changed to 0.11 parts by mass of UVA-SH.

The resin molded article after annealing was subjected to FT-IR measurement, and disappearance of a peak of mercapto group (2400-2600 $cm^{-1}$) was confirmed. From this result, it was confirmed that a reaction product of UVA-SH and the polyepisulfide compound was formed in the polymerizable composition.

<Evaluation of Ultraviolet Absorption Performance of UVA>

A mixed solution was prepared by mixing 5.0 mg of the ultraviolet absorber used in the Examples and Comparative Examples with 10 mL of chloroform, and the ultraviolet-visible absorption spectra, ranging from 300 nm to 800 nm, was measured using a UV-vis spectrophotometer (UV-1800, manufactured by Shimadzu Corporation). The transmittances (%) at 380 nm and at 400 nm are shown in Table 1.

Table 1

| | Viosorb 583 | Eversorb 88 | UVA-OH | UVA-SH |
|---|---|---|---|---|
| 380nm Transmittance (%) | 0.13 | 0.03 | 0.01 | 4.92 |
| 400nm Transmittance (%) | 85.44 | 13.28 | 6.54 | 95.51 |

As shown in Table 1, both UVA-OH and UVA-SH obtained in Synthesis Example 1 and Synthesis Example 2 exhibited low light transmittance in the ultraviolet region (particularly at 380 nm), demonstrating their performance as ultraviolet absorbers.

<Evaluation of Ultraviolet Absorption Performance of Resin Molded Articles>

The resin molded articles produced in the Examples and Comparative Examples were subjected to the measurement of ultraviolet-visible absorption spectra, ranging from 300 nm to 800 nm, using a UV-vis spectrophotometer (UV-1800, manufactured by Shimadzu Corporation). The transmittances (%) at 380 nm, 400 nm, and 420 nm are shown in Table 2.

<Evaluation of Elution of Ultraviolet Absorber>

The elution properties of the ultraviolet absorber from the resin molded articles produced in the Examples and Comparative Examples were evaluated by conducting the following test.

The resin molded articles were finely pulverized by freeze grinding to obtain resin powder. Using 5 g of the obtained resin powder, ultrasonic extraction was performed twice (10 minutes each) at 25°C with 35 mL of dichloromethane. Dichloromethane was removed from the resulting extract using a rotary evaporator. The amount of the concentrate obtained after removing the solvent was defined as the amount of eluted component X (mg). The elution recovery (wt%) was calculated based on the theoretical amount of UVA Y (mg) contained in 5 g of the resin powder and the amount of eluted component X (mg) according to the following formula. The results are shown in Table 1.

$$\text{Elution recovery (wt\%)} = (X / Y) \times 100$$

The ultraviolet-visible absorption spectra were measured by dissolving 100 mg of the eluted components obtained by the above method in 10 mL of chloroform. When the transmittance at 370 nm was 90% or higher, it was determined that the eluted component did not contain a sufficient amount of a component having absorbance at this wavelength, and that the content of benzotriazole skeleton in the eluted component was sufficiently low (1% or less). The results are shown in Table 1.

For the calibration, an ultraviolet absorber (Viosorb-583) in the amounts shown in the following (1) to (3) was dissolved in 10 mL of chloroform, and the ultraviolet-visible absorption spectra were measured. The results are as follows:

(1) Transmittance (T%) at 5.0 mg (approx. 500 ppm equivalent) = 0.03%

(2) Transmittance (T%) at 0.5 mg (approx. 50 ppm equivalent) = 20.5%

(3) Transmittance (T%) at 0.05 mg (approx. 5 ppm equivalent) = 91.2%

Table 2

| | | Examp les | | | | | | | Comparative Examples | | | |
|---|---|---|---|---|---|---|---|---|---|---|---|---|
| | | 1 | 2 | 3 | 4 | 5 | 6 | 7 | 1 | 2 | 3 | 4 |
| Amont of UVA relative to 100 parts by mass of polymerizable components (parts by mass) | | 0.5 | 0.5 | 1.0 | 1.3 | 1.3 | 1.3 | 1.0 | 1.5 | 1.5 | 1.5 | 1.0 |
| UV Absorption Properties | 380nm Transmittance (%) | 0.01 | 0.02 | 0.01 | 0.03 | 0.02 | 0.02 | 0.00 | 0.01 | 0.03 | 0.01 | 0.00 |
| | 400nm Transmittance (%) | 0.25 | 0.29 | 0.00 | 35.10 | 16.10 | 30.90 | 1.83 | 0.02 | 0.00 | 0.72 | 3.43 |
| | 420nm Transmittance (%) | 61.70 | 62.33 | 2.97 | 83.30 | 82.05 | 85.40 | 27.50 | 79.10 | 81.20 | 78.60 | 72.50 |
| Elution Properties | Amount used in elution test (g) | 5.0 | 5.0 | 5.0 | 5.0 | 5.0 | 5.0 | 5.0 | 5.0 | 5.0 | 5.0 | 5.0 |
| | Amount of eluted component (mg) | 8.0 | 0.8 | 22.4 | 3.6 | 1.2 | 11.7 | 4.4 | 26.8 | 36.5 | 22.2 | 68.0 |
| | Theoretical UVA amount in amount used in elution test (mg) | 25.0 | 25.0 | 50.0 | 65.0 | 65.0 | 65.0 | 50.0 | 75.0 | 75.0 | 75.0 | 50.0 |
| | Elusion recovery (wt%) | 32.0% | 3.2% | 44.8% | 5.5% | 1.8% | 18.0% | 8.8% | 35.7% | 48.7% | 29.6% | 136.0% |
| | Content of benzotriazole skeleton in eluted component | 1% or less | 1% or less | 1% or less | 1% or less | 1% or less | 1% or less | 1% or less | 90% or more | 90% or more | 90% or more | 90% or more |
| Appearance of molded article | | Clear | Clear | Clear | Clear | Clear | Clear | Clear | Clear | Clear | Clear | Clear |

As shown in Table 2, all of the resin molded articles obtained in Examples 1 to 7 exhibited low light transmittance in the ultraviolet region, demonstrating sufficient ultraviolet absorption capability.

Furthermore, the resin molded articles obtained in Examples 1 to 7 showed higher transmittance T% at 370 nm (90% or higher) for the eluted components, as compared with those obtained in Comparative Examples 1 to 4, indicating a low content of the benzotriazole skeleton in the eluted components (1% or less). From these results, it was found that the release of the ultraviolet absorber was suppressed in the resin molded articles obtained in Examples 1 to 7. This is considered to be because the ultraviolet absorber in the resin molded articles obtained in Examples 1 to 7 is in a state of being bonded to the polymer structure.

The disclosure of Japanese Patent Application No. 2023-113708 is incorporated herein in its entirety by reference.

All publications, patent applications, and technical standards cited herein are incorporated in their entirety by reference, to the same extent as if each individual publication, patent application, and technical standard were specifically and individually indicated to be incorporated by reference.

## Claims

1. A polymerizable composition, comprising:

   at least one selected from a polyiso(thio)cyanate compound or a polyepisulfide compound;
   a polythiol compound; and
   a compound represented by the following general formula (1) or a reaction product of the compound represented by the following general formula (1) with a polyiso(thio)cyanate compound or a polyepisulfide compound:

   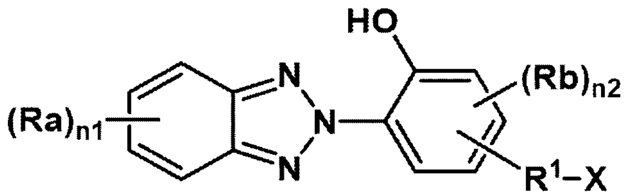

   (1)

   wherein, in the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X is OH, SH or $NHR^2$; and $R^2$ represents a hydrogen atom or a hydrocarbon group.

2. The polymerizable composition according to claim 1, wherein the polyiso(thio)cyanate compound includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

3. The polymerizable composition according to claim 1, wherein the polythiol compound includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

4. A cured product of the polymerizable composition according to claim 1.

5. An optical material, comprising the cured product according to claim 4.

6. A spectacle lens, comprising the optical material according to claim 5.

7. A compound represented by the following general formula (1):

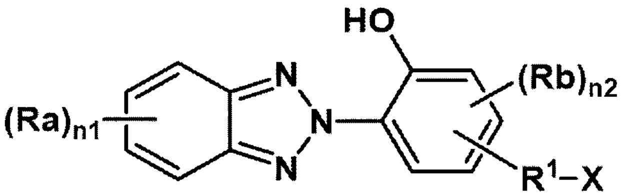

(1)

wherein, in the general formula (1), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X is OH, SH or $NHR^2$; and $R^2$ represents a hydrogen atom or a hydrocarbon group.

**8.** A compound, comprising a reaction product of the compound according to claim 7 with a polyiso(thio)cyanate compound or a polyepisulfide compound.

**9.** A compound having a structure represented by the following general formula (2) and an iso(thio)cyanate group:

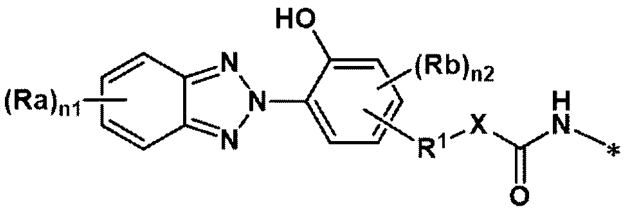

(2)

wherein, in the general formula (2), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X represents O, S or $NR^2$; $R^2$ represents a hydrogen atom or a hydrocarbon group; and * represents a bonding position.

**10.** A compound having a structure represented by the following general formula (3) and an episulfide group:

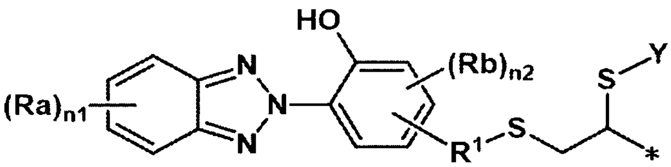

(3)

wherein, in the general formula (3), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; $R^2$ represents a hydrogen atom or a hydrocarbon group; * represents a bonding position; and Y represents a hydrogen atom or a bonding position.

**11.** A method for producing a polymerizable composition, the method comprising mixing the compound according to any one of claim 7 to claim 10, at least one selected from a polyiso(thio)cyanate compound or a polyepisulfide compound, and a polythiol compound.

**12.** A resin having a structure represented by the following general formula (2) or the following general formula (3):

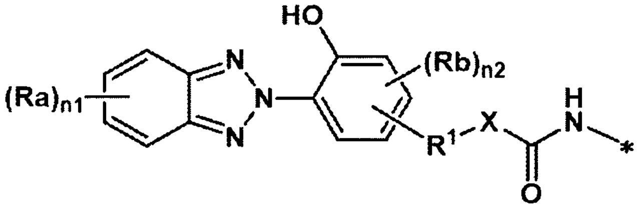

(2)

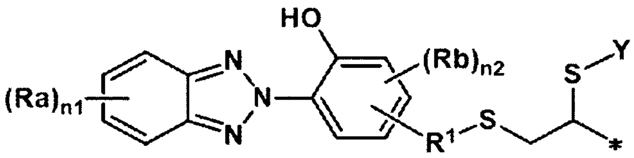

(3)

wherein, in the general formula (2) and the general formula (3), Ra represents a monovalent hydrocarbon group or a halogen atom; n1 is a number from 0 to 4; Rb represents a monovalent group that does not contain OH, SH or $NHR^2$; n2 is a number from 0 to 3; $R^1$ represents a divalent hydrocarbon group; X represents O, S or $NR^2$; $R^2$ represents a hydrogen atom or a hydrocarbon group; * represents a bonding position; and Y represents a hydrogen atom or a bonding position.

**INTERNATIONAL SEARCH REPORT**

International application No. **PCT/JP2024/024854**

**A. CLASSIFICATION OF SUBJECT MATTER**

***C08G 18/38***(2006.01)i; ***C08G 18/08***(2006.01)i; ***C08G 75/06***(2006.01)i; ***G02B 1/04***(2006.01)i; ***G02C 7/00***(2006.01)i
FI: C08G18/38 076; C08G18/08 038; C08G75/06; G02C7/00; G02B1/04

According to International Patent Classification (IPC) or to both national classification and IPC

**B. FIELDS SEARCHED**

Minimum documentation searched (classification system followed by classification symbols)

C08G18/38; C08G18/08; C08G75/06; G02B1/04; G02C7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2014/136486 A1 (FUJIFILM CORPORATION) 12 September 2014 (2014-09-12) comparative examples 3, 4 | 7 |
| Y | | 1-9, 11-12 |
| A | | 10 |
| X | JP 8-208628 A (OSAKA SEIKA KOGYO KK) 13 August 1996 (1996-08-13) claim 1 | 7-9, 12 |
| Y | | 1-9, 11-12 |
| A | | 10 |
| X | US 2013/0067664 A1 (EVERLIGHT CHEM IND CORP.) 21 March 2013 (2013-03-21) paragraph [0069] | 7-9, 12 |
| Y | | 1-9, 11-12 |
| A | | 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 August 2024** | **17 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/024854**

**C. DOCUMENTS CONSIDERED TO BE RELEVANT**

| Category* | Citation of document, with indication, where appropriate, of the relevant passages | Relevant to claim No. |
|---|---|---|
| X<br><br>Y<br>A | JP 60-38411 A (IOLAB CORPORATION) 28 February 1985 (1985-02-28)<br>claims 26-34 | 7<br><br>1-9, 11-12<br>10 |
| X<br><br>Y<br>A | JP 2009-270076 A (SHIPRO KASEI KAISHA LTD.) 19 November 2009 (2009-11-19)<br>claim 1 | 7<br><br>1-9, 11-12<br>10 |
| X<br><br>Y<br>A | US 7825257 B1 (BAUSCH & LOMB INCORPORATED) 02 November 2010 (2010-11-02)<br>column 10, formula VII | 7<br><br>1-9, 11-12<br>10 |
| X<br><br>A | WO 2023/120036 A1 (FUJIFILM CORPORATION) 29 June 2023 (2023-06-29)<br>paragraph [0282] | 7<br><br>1-6, 8-12 |
| X<br><br>A | JP 63-248885 A (CITIZEN WATCH CO., LTD.) 17 October 1988 (1988-10-17)<br>page 3, upper left column, lines 1-3 | 7<br><br>1-6, 8-12 |
| Y<br><br>A | JP 2003-321527 A (DAICEL CHEM. IND. LTD.) 14 November 2003 (2003-11-14)<br>paragraph [0002] | 1-9, 11-12<br><br>10 |
| Y<br>A | WO 2023/120606 A1 (MITSUI CHEMICALS, INC.) 29 June 2023 (2023-06-29) | 1-9, 11-12<br>10 |

Form PCT/ISA/210 (second sheet) (July 2022)

**INTERNATIONAL SEARCH REPORT**
**Information on patent family members**

International application No.
**PCT/JP2024/024854**

| Patent document cited in search report | Publication date (day/month/year) | Patent family member(s) | Publication date (day/month/year) |
|---|---|---|---|
| WO 2014/136486 A1 | 12 September 2014 | US 2015/0380042 A1<br>comparative examples 3, 4<br>CN 105027205 A | |
| JP 8-208628 A | 13 August 1996 | (Family: none) | |
| US 2013/0067664 A1 | 21 March 2013 | TW 201313779 A<br>CN 102993408 A<br>KR 10-2013-0030734 A | |
| JP 60-38411 A | 28 February 1985 | US 4611061 A<br>claims 1-6<br>EP 131468 A2 | |
| JP 2009-270076 A | 19 November 2009 | (Family: none) | |
| US 7825257 B1 | 02 November 2010 | (Family: none) | |
| WO 2023/120036 A1 | 29 June 2023 | TW 202328354 A | |
| JP 63-248885 A | 17 October 1988 | (Family: none) | |
| JP 2003-321527 A | 14 November 2003 | TW 200502283 A | |
| WO 2023/120606 A1 | 29 June 2023 | KR 10-2024-0056733 A<br>CN 118159876 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019015922 A
- WO 2011055540 A
- WO 2016125736 A
- JP 2023113708 A